# EUROPÄISCHE PATENTSCHRIFT

(11) **EP 0 832 940 B1**
(45) Veröffentlichungstag und Bekanntmachung des Hinweises auf die Patenterteilung: **17.10.2001**
(21) Anmeldenummer: 97810673.0
(22) Anmeldetag: 17.09.1997
(51) Int. Cl.: C09B 67/22, C09B 62/09, D06P 3/66

(54) **Farbstoffmischungen, Verfahren zu deren Herstellung und deren Verwendung**
Mixtures of dyes, process for their preparation and the use thereof
Mélanges de colorants, leur procédé de fabrication et leur utilisation

(30) Priorität: 26.09.1996 CH 236096
(43) Veröffentlichungstag der Anmeldung: 01.04.1998
(73) Patentinhaber: Ciba Specialty Chemicals Holding Inc., 4057 Basel (CH)
(72) Erfinder: Ruhlmann, Edmond, 68300 Saint-Louis (FR); Fekete, Laszlo, 4126 Bettingen (CH)

(56) Entgegenhaltungen:
- EP-A- 0 478 503
- EP-A- 0 625 551
- WO-A-93/18224

## Beschreibung

Die vorliegende Anmeldung betrifft neue verbesserte Reaktivfarbstoffmischungen, die sich besonders für das Färben von cellulosehaltigen Fasermaterialien nach den für Reaktivfarbstoffe gebräuchlichen Verfahren eignen, und die nass- und lichtechte Färbungen ergeben; sowie Verfahren zur Herstellung dieser Farbstoffmischungen, und deren Verwendung zum Färben oder Bedrucken von textilen Materialien.

Gegenstand der vorliegenden Erfindung sind Farbstoffmischungen, welche dadurch gekennzeichnet sind, dass sie mindestens einen Farbstoff der Formel 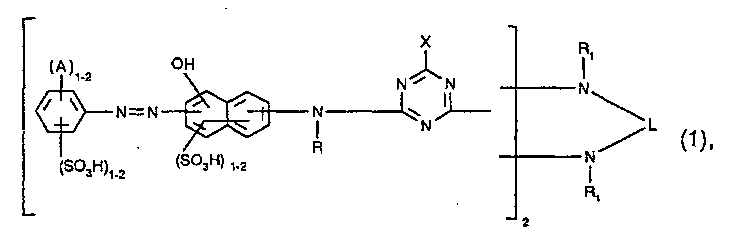 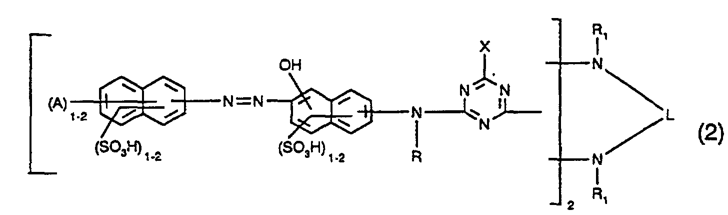 und 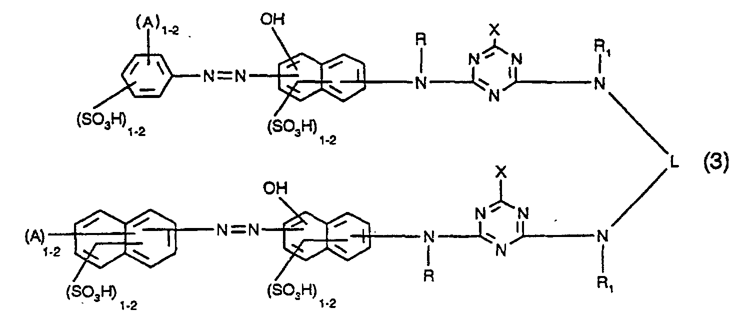 enthalten, worin A Wasserstoff oder ein Substituent, R und R₁ Wasserstoff oder C₁-C₄-Alkyl, X Halogen und L ein aliphatisches Brückenglied mit 1 bis 12 Kohlenstoffatomen ist.

In der EP-A-0 625 551 wird eine Farbstoffmischung offenbart, die sich vom Gegenstand der vorliegenden Erfindung durch zwei der Mischungskomponenten hinsichtlich der in diesen enthaltenen Farbstoffresten unterscheidet.

In den erfindungsgemässen Farbstoffmischungen kommen als Substituent A vorzugsweise in Betracht: C₁-C₄-Alkyl, wie z.B. Methyl, Aethyl, n-Propyl, Isopropyl, C₁-C₄-Alkoxy, wie z.B. Methoxy, Aethoxy, lsopropoxy, Halogen, wie z.B. Fluor, Brom oder insbesondere Chlor, sowie Carboxy.

Als C₁-C₄-Alkyl kommt für R und R₁ insbesondere Methyl, Aethyl, n-Propyl, Isopropyl oder n-Butyl in Betracht. Vorzugsweise bedeutet R als C₁-C₄-Alkyl Methyl.

Der Rest X als Halogen bedeutet Chlor, Brom oder vorzugsweise Fluor.

Der Rest L ist vorzugsweise ein C₂-C₁₂-Alkylenrest, welcher durch 1, 2 oder 3 Reste -O-unterbrochen sein kann, besonders bevorzugt ist L ein C₂-C₆-Alkylenrest. Ganz besonders bevorzugt sind Brückenglieder L der Formel: -CH₂-, -CH₂-CH₂-, -(CH₂)₃-, -CH₂-CH(CH₃)-,-(CH₂)₄-, -(CH₂)₅-; -(CH₂)₆-.

In den erfindungsgemässen Mischungen der Farbstoffe der Formeln (1), (2) und (3) sind die Reste A, X, R, R₁ und L vorzugsweise identisch.

Besonders bevorzugt sind Farbstoffmischungen, worin A Wasserstoff bedeutet. Besonders bevorzugt sind ferner Farbstoffmischungen, worin A Methoxy bedeutet.

Ebenfalls besonders bevorzugt sind Farbstoffmischungen, worin R und R₁ Wasserstoff ist.

Ganz besonders bevorzugt sind Farbstoffmischungen, worin A, R und R₁ Wasserstoff bedeuten.

Besonders wichtig ist die Farbstoffmischung der Farbstoffe der Formeln 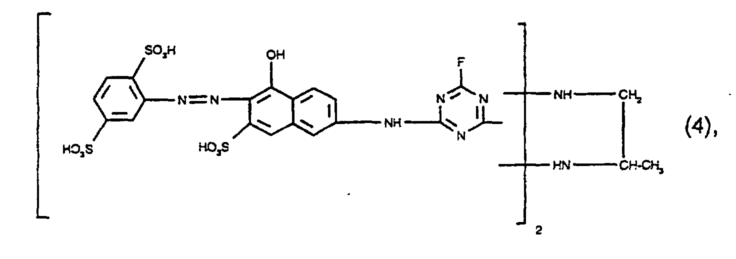 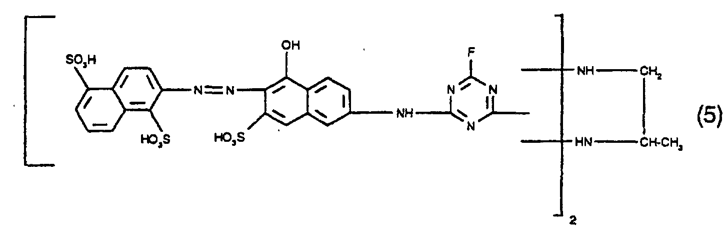 und

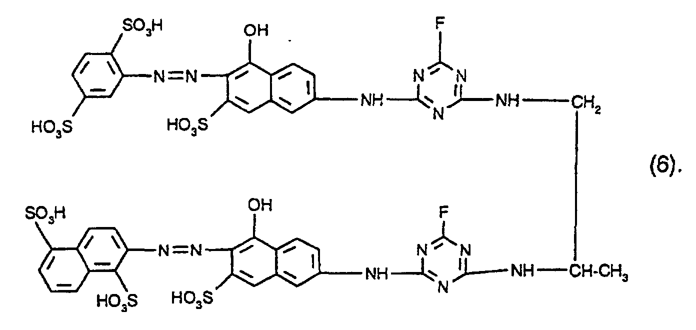

Gegenstand der Erfindung ist ferner ein Verfahren zur Herstellung der Farbstoffmischungen, welches dadurch gekennzeichnet ist, dass man einen Farbstoff der Formel 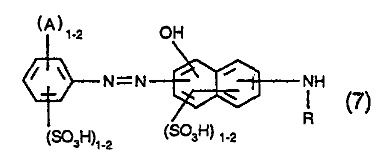 und einen Farbstoff der Formel 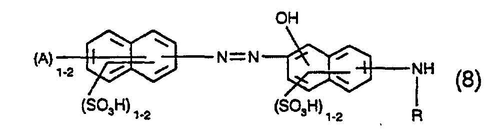 mit Cyanurhalogenid und anschliessend mit einem Diamin der Formel

H(R₁)N-L-N(R₁)H (9)

umsetzt, worin A, R, R₁, X und L die oben angegebenen Bedeutungen haben.

Vorzugsweise setzt man ein Cyanurhalogenid, insbesondere Cyanurfluorid, zunächst mit in etwa jeweils der halb-stöchiometrischen Menge der Verbindungen der Formeln (7) und (8) bei einer Temperatur von -5° bis 20°C, vorzugsweise 0 bis 5°C, um, wobei der pH-Wert durch Zugabe geeigneter Basen, z.B. Alkalimetallbasen, wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise mindestens stöchiometrische Mengen des Diamins der Formel (9) gegeben, und die Reaktion bei leicht erhöhter Temperatur, vorzugsweise 10 bis 60°C, insbesondere 15 bis 30°C, und einem neutralen bis alkalischen pH-Wert, vorzugsweise 7 bis 10, insbesondere 9 bis 10, zu Ende gebracht.

Als Cyanurhalogenid eignen sich insbesondere Cyanurchlorid und vorzugsweise Cyanurfluorid.

Die wichtige Farbstoffmischung der Farbstoffe der Formeln (4), (5)und (6) wird hergestellt, indem man einen Farbstoff der Formel 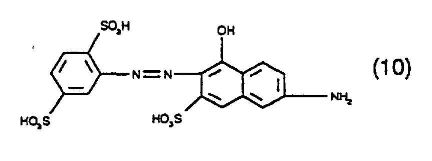 und einen Farbstoff der Formel 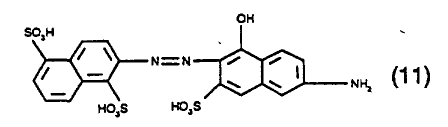 mit Cyanurfluorid und anschliessend mit Propan-1,2-diamin umsetzt.

Die Farbstoffe der Formeln (7) und (8) sind an sich bekannt oder können in Analogie zu bekannten Farbstoffen hergestellt werden, indem man eine Benzol- oder Naphthalindiazokomponente diazotiert und auf eine Aminonaphthol-mono- oder -disulfonsäure kuppelt.

Als Diamine der Formel (9) kommen z.B. in Betracht: H₂N-CH₂-NH₂, H₂N-(CH₂)₂-NH₂, H₂N-(CH₂)₃-NH₂, H₂N-CH₂-CH(CH₃)-NH₂, H₂N-(CH₂)₆-NH₂, NH(CH₃)-CH₂-CH₂-NH(CH₃), NH₂-CH₂-CH₂-NH(C₂H₅), NH₂-CH₂-CH₂-CH₂-NH(CH₃), H₂N-CH(C₂H₅)-CH₂-CH₂-NH₂ H₂N-CH₂-C(CH₃)₂-CH₂-NH₂, H₂N-CH₂-CH₂-CH₂-CH(CH₃)-CH₂-NH₂, H₂N-(CH₂)₃-O-(CH₂)₄-O-(CH₂)₃-NH₂, H₂N-(CH₂)₂-O-(CH₂)₂-O-(CH₂)₂-NH₂.

Die Farbstoffe der Formeln (1), (2) und (3), welche mindestens zwei Sulfogruppen enthalten, liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht oder deren Mischungen. Als Beispiele seien die Natrium-, Lithium-, Kalium- oder Ammoniumsalze oder das Salz des Mono-, Di- oder Triäthanolamins oder Natrium-/Lithium- oder Natrium-/Lithium-/Ammonium-Salzmischungen genannt.

Die Reaktivfarbstoffmischungen eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose z.B. Viscose, ferner Modalfasern und deren Mischungen mit Baumwolle. Die Reaktivfarbstoffmischungen sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffmischungen zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke auf Cellulosefasermaterialien besitzen eine hohe Farbstärke und eine hohe FaserFarbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

Zu einer neutralen Lösung von 55,3 Teilen des Monoazofarbstoffes der Formel 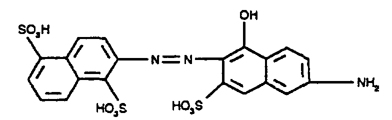 und 50,3 Teilen des Monoazofarbstoffes der Formel 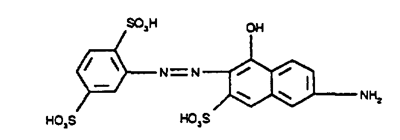 in 1400 Teilen Wasser werden bei einer Temperatur unterhalb von 2° 28 Teile Cyanurfluorid zugetropft. Während des Zutropfens wird der pH-Wert durch Zugabe von wässriger Natriumhydroxid-Lösung konstant gehalten. Nach beendeter Reaktion tropft man eine Lösung von 37 Teilen Propan-1,2-diamin in 60 Teilen Wasser derart zu, dass der pH den Wert 9,5 nicht übersteigt und hält anschliessend den pH-Wert bei 9,5 durch Zugabe von wässriger Natriumhydroxid-Lösung konstant. Man lässt auf Raumtemperatur erwärmen, befreit die Lösung dialytisch von Salz und dampft das erhaltene Produkt ein. Man erhält eine Farbstoffmischung, welche die folgenden in Form der freien Säure angegebenen Farbstoffe enthält. 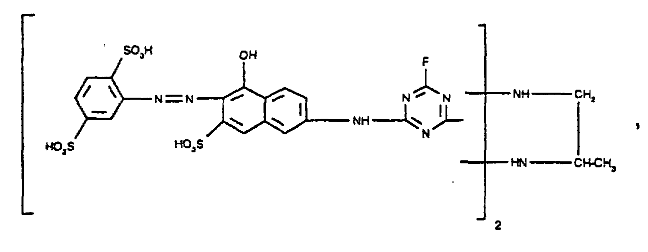 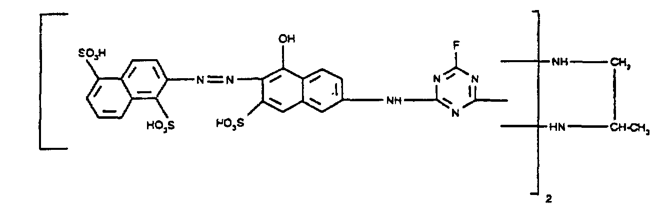 und

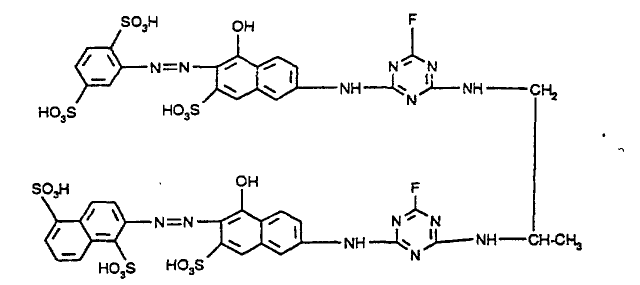

Die erhaltene Farbstoffmischung färbt Cellulosefasern in orangen Tönen.

Wenn man wie in dem Beispiel angegeben verfährt, jedoch anstelle von Propan-1,2-diamin ein Diamin der Formel

H₂N-(CH₂)₃-NH₂

H₂N-(CH₂)₆-NH₂

NH(CH₃)-CH₂-CH₂-NH(CH₃)

NH₂-CH₂-CH₂-NH(C₂H₅)

NH₂-CH₂-CH₂-CH₂-NH(CH₃)

H₂N-CH(C₂H₅)-CH₂-CH₂-NH₂

H₂N-CH₂-C(CH₃)₂-CH₂-NH₂

H₂N-CH₂-CH₂-CH₂-CH(CH₃)-CH₂-NH₂

H₂N-(CH₂)₃-O-(CH₂)₄-O-(CH₂)₃-NH₂

H₂N-(CH₂)₂-O-(CH₂)₂-O-(CH₂)₂-NH₂

verwendet, erhält man analoge Farbstoffe mit entsprechenden Alkylenbrückengliedern, die Baumwolle in orangen Tönen färben.

Wenn man wie in Beispiel 1 angegeben verfährt, jedoch anstelle der dort genannten Monoazofarbstoffe die folgenden Monoazofarbstoffe in äquimolarer Menge einsetzt, und als Diamin anstelle von Propan-1,2-diamin die in den nachfolgenden Beispielen angegebenen Diamine in äquimolarer Menge einsetzt, erhält man die nachfolgend angegebenen Mischungen:

### Beispiel 2:

Monoazoverbindungen der Formeln 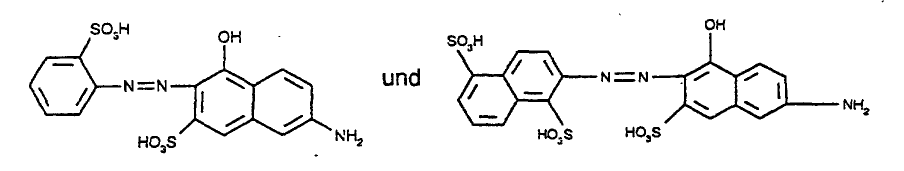 Diamin: 1,2-Äthylendiamin

Man erhält eine Farbstoffmischung, welche die folgenden in Form der freien Säure angegebenen Farbstoffe enthält: 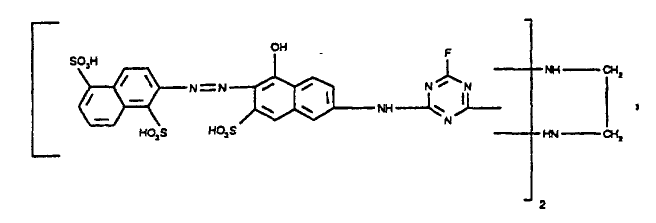 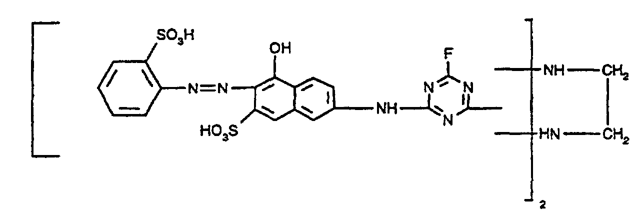 und

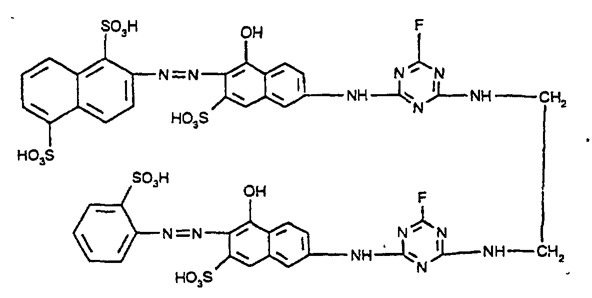

Die erhaltene Farbstoffmischung färbt Cellulosefasern in orangen Tönen.

### Beispiel 3:

Monoazoverbindungen der Formeln 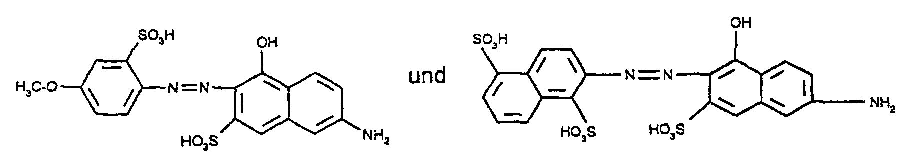 Diamin: Propan-1,2-diamin

Man erhält eine Farbstoffmischung, welche die folgenden in Form der freien Säure angegebenen Farbstoffe enthält: 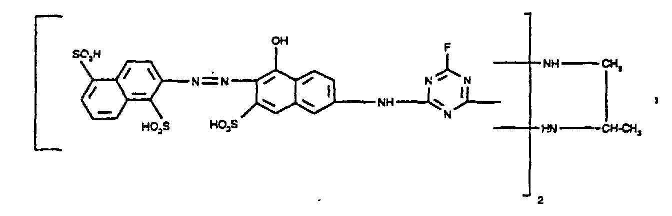 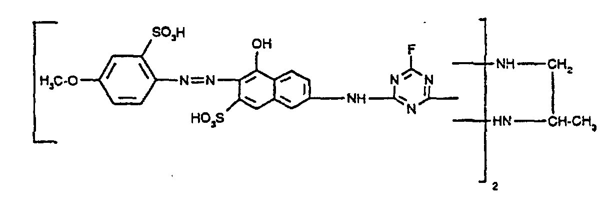 und

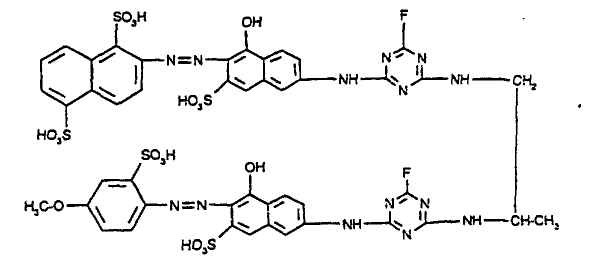

Die erhaltene Farbstoffmischung färbt Cellulosefasern in orangen Tönen.

### Beispiel 4:

Monoazoverbindungen der Formeln 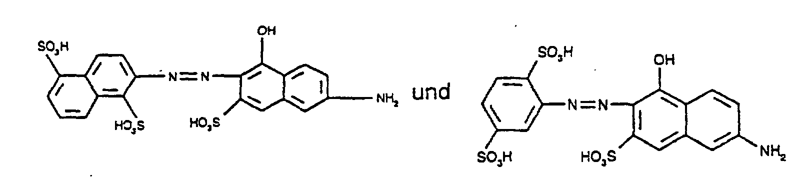 Diamin: 1,2-Äthylendiamin

Man erhält eine Farbstoffmischung, welche die folgenden in Form der freien Säure angegebenen Farbstoffe enthält: 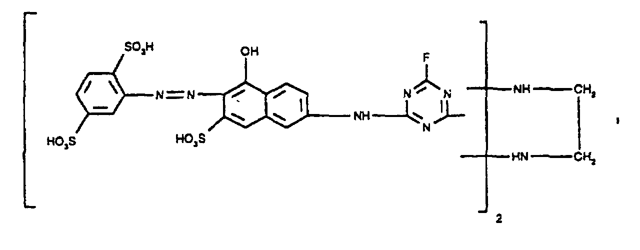 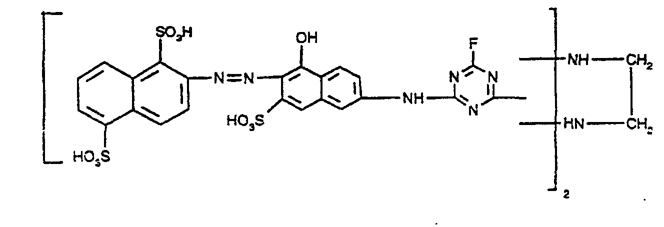 und

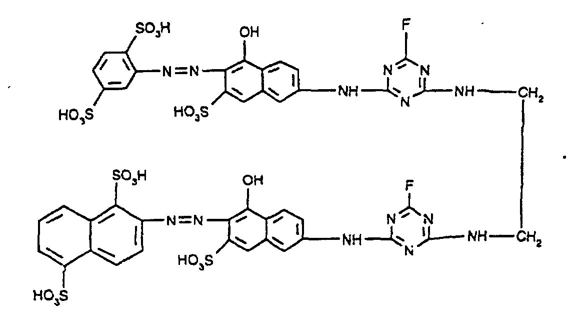

Die erhaltene Farbstoffmischung färbt Cellulosefasern in orangen Tönen.

### Färbevorschrift

2 Teile der gemäss Beispiel 1 erhaltenen Reaktivfarbstoffmischung werden in 400 Teilen Wasser gelöst; dazu gibt man 1500 Teile einer Lösung, die pro Liter 53 g Natriumchlorid enthält. In dieses Färbebad geht man bei 40° mit 100 Teilen Baumwollgewebe ein. Nach 45 Minuten werden 100 Teile einer Lösung, die pro Liter 16 g Natriumhydroxid und 20 g kalziniertes Soda enthält, zugegeben. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 1 erhaltenen Reaktivfarbstoffmischung werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102° in gesättigtem Dampf. Das bedruckte Gewebe wird dann gespült, gegebenenfalls kochend geseift und nochmals gespült, und anschliessend getrocknet.

## Patentansprüche

1. Farbstoffmischungen, **dadurch gekennzeichnet, dass** sie mindestens einen Farbstoff der Formeln 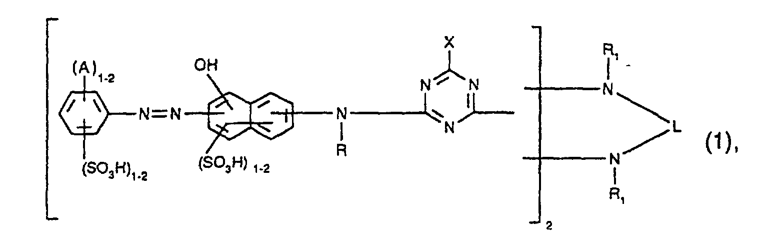 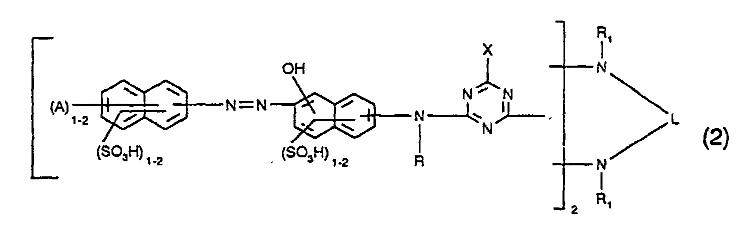 und 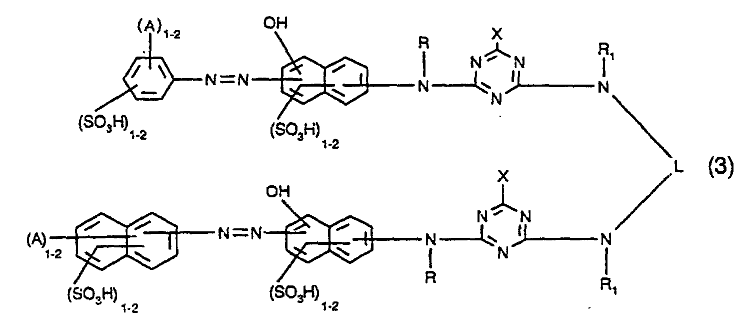 enthalten, worin A Wasserstoff oder ein Substituent, R und R₁ Wasserstoff oder C₁-C₄-Alkyl, X Halogen und L ein aliphatisches Brückenglied mit 1 bis 12 Kohlenstoffatomen ist.

2. Farbstoffmischungen gemäss Anspruch 1, **dadurch gekennzeichnet, dass** X Fluor ist.

3. Farbstoffmischungen gemäss einem der Ansprüche 1 und 2, **dadurch gekennzeichnet, dass** A Wasserstoff ist.

4. Farbstoffmischungen gemäss einem der Ansprüche 1 bis 3, **dadurch gekennzeichnet, dass** A, R und R₁ Wasserstoff bedeuten.

5. Farbstoffmischung gemäss einem der Ansprüche 1 bis 4, **dadurch gekennzeichnet, dass** sie mindestens einen Farbstoff der Formel 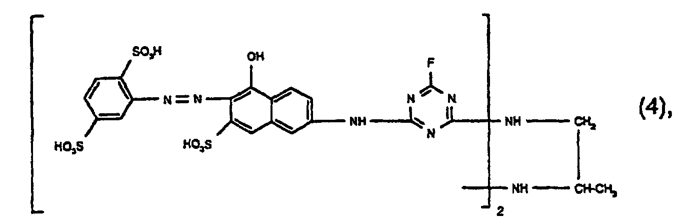 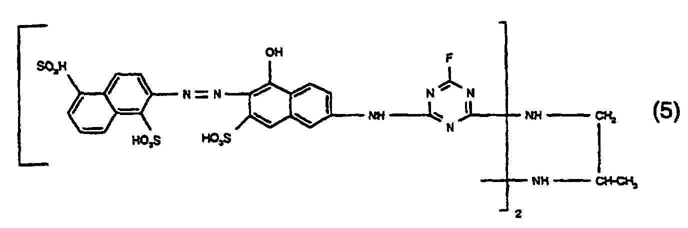 und 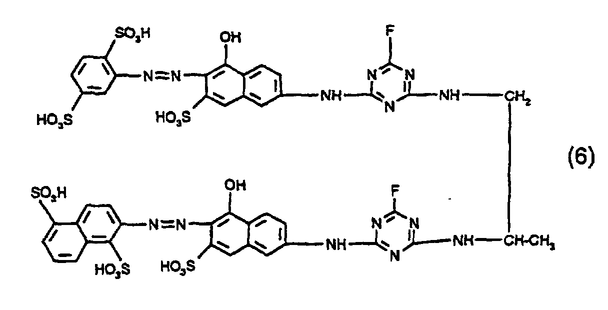 enthält.

6. Verfahren zur Herstellung der Farbstoffmischung gemäss Anspruch 1, **dadurch gekennzeichnet, dass** man einen Farbstoff der Formel 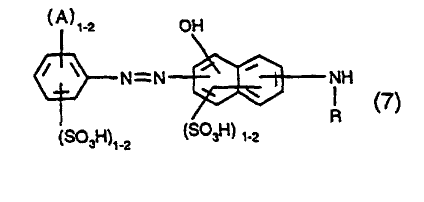 und einen Farbstoff der Formel 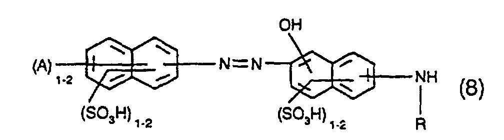 mit Cyanurhalogenid und anschliessend mit einem Diamin der Formel
H(R₁)N-L-N(R₁)H (9)
umsetzt, worin A, R, R₁, X und L die in Anspruch 1 angegebenen Bedeutungen haben.

7. Verwendung der Farbstoffmischung gemäss Anspruch 1 zum Färben von cellulosehaltigen Fasermaterialien.

## Claims

1. A dye mixture comprising at least one dye of formulae 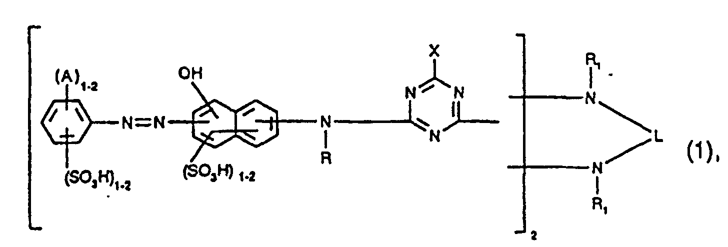 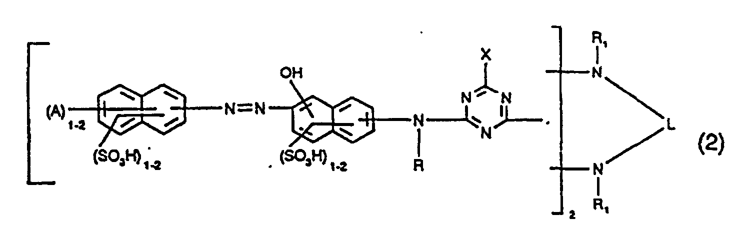 and 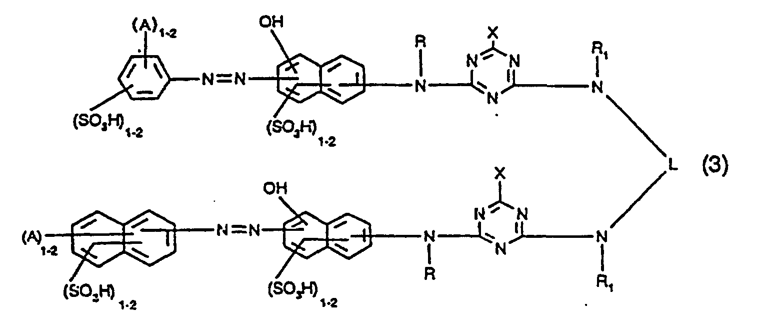 wherein A is hydrogen or a substituent, R and R₁ are hydrogen or C₁-C₄alkyl, X is halogen and L is an aliphatic bridging group containing from 1 to 12 carbon atoms.

2. A dye mixture according to claim 1, wherein X is fluorine.

3. A dye mixture according to either claim 1 or claim 2, wherein A is hydrogen.

4. A dye mixture according to any one of claims 1 to 3, wherein A, R and R₁ are hydrogen.

5. A dye mixture according to any one of claims 1 to 4, which comprises at least one dye of formulae 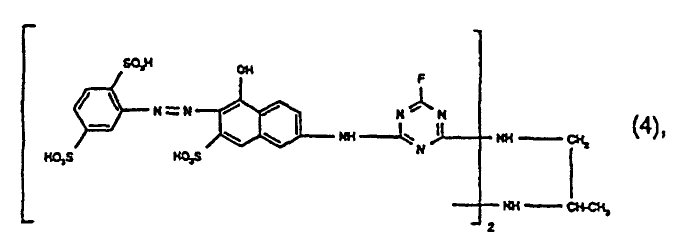 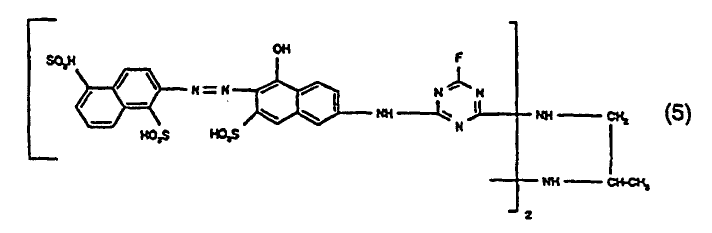 and

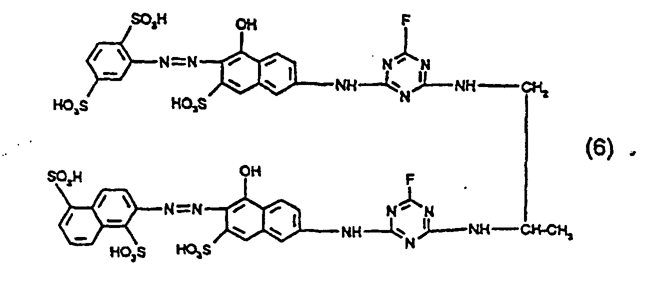

6. A process for the preparation of the dye mixture according to claim 1, which comprises reacting a dye of formula 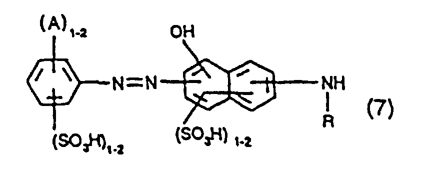 and a dye of formula 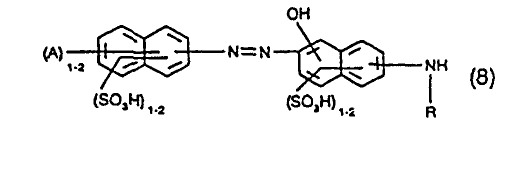 with cyanuric halide and then with a diamine of formula
H(R₁)N-L-N(R₁)H (9),
wherein A, R, R₁, X and L are as defined in claim 1.

7. Use of the dye mixture according to claim 1 for dyeing cellulosic fibre materials.

## Revendications

1. Mélanges de colorants, **caractérisés en ce qu'**ils contiennent au moins un colorant des formules 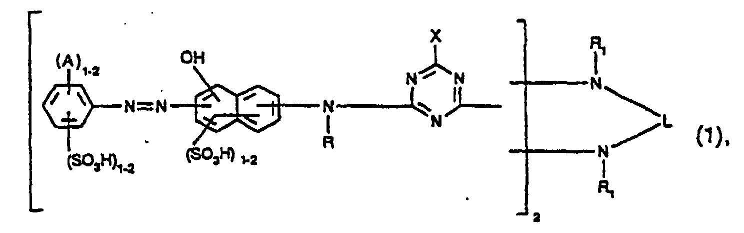 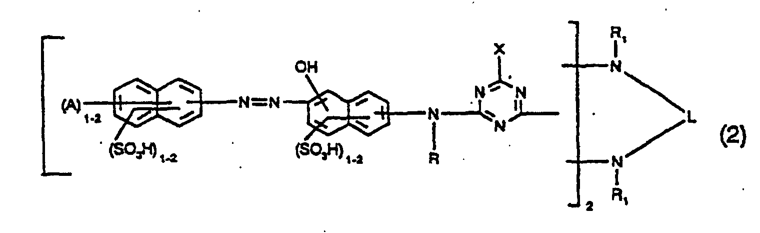 et 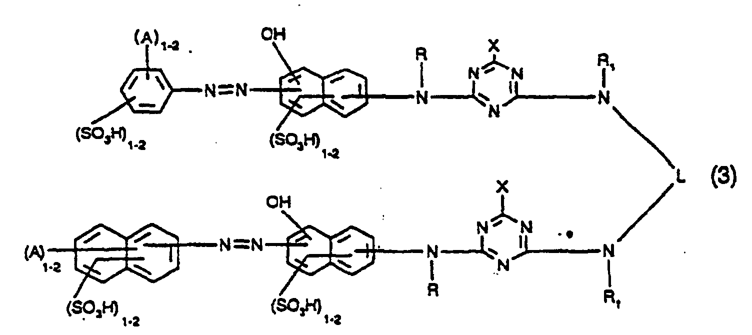 dans lesquelles A est un atome d'hydrogène ou un substituant, R et R₁ sont un atome d'hydrogène ou un groupe alkyle en C₁ à C₄, X est un atome d'halogène et L un groupement pontant aliphatique ayant de 1 à 12 atomes de carbone.

2. Mélanges de colorants selon la revendication 1, **caractérisés en ce que**, X est le fluor.

3. Mélanges de colorants selon l'une des revendications 1 et 2, **caractérisés en ce que**, A est un atome d'hydrogène.

4. Mélanges de colorants selon l'une des revendications 1 à 3, **caractérisés en ce que** A, R et R₁ représentent un atome d'hydrogène.

5. Mélange de colorants selon l'une des revendications 1 à 4, **caractérisé en ce qu'**il contient au moins un colorant de formule 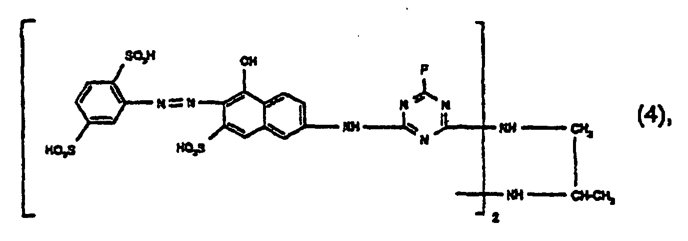 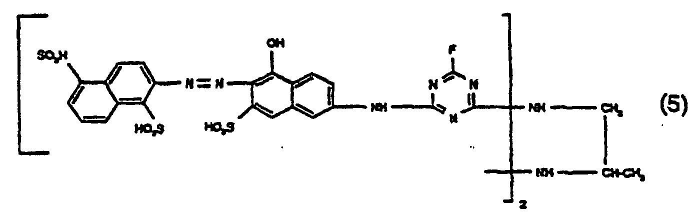 und

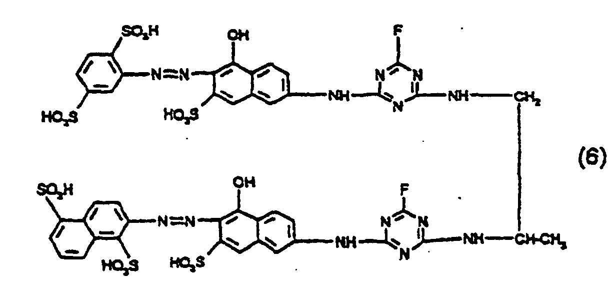

6. Procédé pour la préparation du mélange de colorants selon la revendication 1, **caractérisé en ce qu'**on met à réagir un colorant de formule 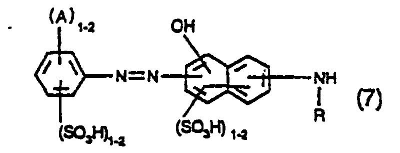 et un colorant de formule 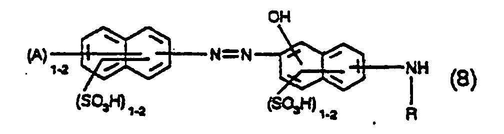 avec un halogénure de cyanuryle et ensuite avec une diamine de formule
**H(R**_{**1**}**)N-L-N(R**_{**1**}**)H (9)**,
dans lesquelles A, R, R₁, X et L ont les significations indiquées à la revendication 1.

7. Utilisation du mélange de colorants selon la revendication 1 pour la teinture de matériaux en fibres cellulosiques.
